# EUROPEAN PATENT SPECIFICATION

(11) **EP 1 584 834 B1**
(45) Date of publication and mention of the grant of the patent: **05.01.2011**
(21) Application number: 04425260.9
(22) Date of filing: 08.04.2004
(51) Int. Cl.: F16D 65/14, F16D 55/22, F16D 59/02

(54) **Braking unit for a motor vehicle**
Bremsanlage für ein Fahrzeug
Dispositif de freinage pour un véhicule

(43) Date of publication of application: 12.10.2005
(73) Proprietor: SAME DEUTZ-FAHR GROUP S.P.A., 24047 Treviglio (Bergamo) (IT)
(72) Inventor: Bellini, Alberto, 24047 Treviglio (Bergamo) (IT); Heraudet, Laurent, 24047 Treviglio (Bergamo) (IT)
(74) Representative: De Gregori, Antonella

(56) References cited:
- WO-A-83/03124
- DE-A- 19 857 962
- US-A- 4 723 636

## Description

The present invention relates to a braking unit for a motor-vehicle, in particular for a tractor.

A motor-vehicle is commonly provided with a main braking device, the so-called service brake, which enables the driver to slow down or stop the vehicle quickly and safely under various conditions of speed and load of the vehicle and of slope of the road. The braking action of the service brake can be modulated by the driver. Moreover, the driver can apply the braking action from his driving place while holding his hands on the steering control device (steering wheel).

Motor-vehicles are usually provided also with a second braking device, the so-called handbrake, intended to operate as parking brake and/or as emergency brake. The emergency brake function requires the handbrake to stop the vehicle within a reasonable distance in case of breakdown of the service brake. The parking brake function requires the handbrake to hold the vehicle in a stationary position, even on a sloping road and without the presence of the driver on board of the vehicle. This function is generally carried out in a purely mechanical way.

For example, document DE 198 57 962 A discloses a braking unit for an industrial truck according to the preamble of claim 1, wherein two braking devices can be operated on the same brake plate to perform both service and parking brake functions.

Document WO 83/03124 A discloses an annular multi-piston brake apparatus comprising a first brake piston and a second brake piston that act on a plurality of brake discs to perform both service and parking brake functions.

Document US-A-4 723 636 discloses a braking device with multiple effects, including parking and emergency braking and service braking, wherein two independent brake actuating means can act on the same brake plate.

It is the object of the present invention to provide a further braking device which can be installed on the front and/or rear axle of the vehicle and which is operable independently of the other braking devices mentioned above

This object is fully achieved according to the invention by virtue of a braking unit having the characteristics set forth in Claim 1. Further advantageous characteristics are set forth in the dependent claims.

The characteristics and the advantages of the invention will appear from the detailed description which follows, given purely by way of non-limiting example with reference to the appended drawings, in which:
- Figure 1 is a sectional view of a braking unit for a motor-vehicle comprising a service brake and an auxiliary braking device according to an embodiment not forming part of the present invention;
- Figure 2A is a sectional view of the braking unit of Figure 1 showing a first operating condition in which the auxiliary braking device is activated and the service brake is actuated;
- Figure 2B is a sectional view of the braking unit of Figure 1 showing a second operating condition in which the auxiliary braking device is activated and the service brake is released;
- Figure 3A is a sectional view of the braking unit of Figure 1 showing a third operating condition in which the auxiliary braking device is released and the service brake is actuated;
- Figure 3B is a sectional view of the braking unit of Figure 1 showing a fourth operating condition in which both the auxiliary braking device and the service brake are released;
- Figure 4 is a sectional view of a braking unit for a motor-vehicle comprising a service brake, a parking/emergency brake and an auxiliary braking device according to a preferred embodiment of the present invention;
- Figure 5A is a sectional view of the braking unit of Figure 4 showing a first operating condition in which the auxiliary braking device is activated and both the service brake and the handbrake are actuated;
- Figure 5B is a sectional view of the braking unit of Figure 4 showing a second operating condition in which the auxiliary braking device is activated, the service brake is actuated, whereas the handbrake is released;
- Figure 6A is a sectional view of the braking unit of Figure 4 showing a third operating condition in which the auxiliary braking device is activated and both the service brake and the handbrake are released;
- Figure 6B is a sectional view of the braking unit of Figure 4 showing a fourth operating condition in which the auxiliary braking device is activated, the service brake is released, whereas the handbrake is actuated;
- Figure 7A is a sectional view of the braking unit of Figure 4 showing a fifth operating condition in which the auxiliary braking device is released and both the service brake and the handbrake are actuated;
- Figure 7B is a sectional view of the braking unit of Figure 4 showing a sixth operating condition in which the auxiliary braking device is released, the service brake is actuated, whereas the handbrake is released;
- Figure 8A is a sectional view of the braking unit of Figure 4 showing a seventh operating condition in which both the auxiliary braking device and the service brake are released, whereas the handbrake is actuated; and
- Figure 8B is a sectional view of the braking unit of Figure 4 showing an eighth operating condition in which the auxiliary braking device, the service brake and the handbrake are released.

In the description and the claims which follow, terms such as "radial" and "transverse", "front" and "rear" are to be intended as referred to the mounted condition on the vehicle.

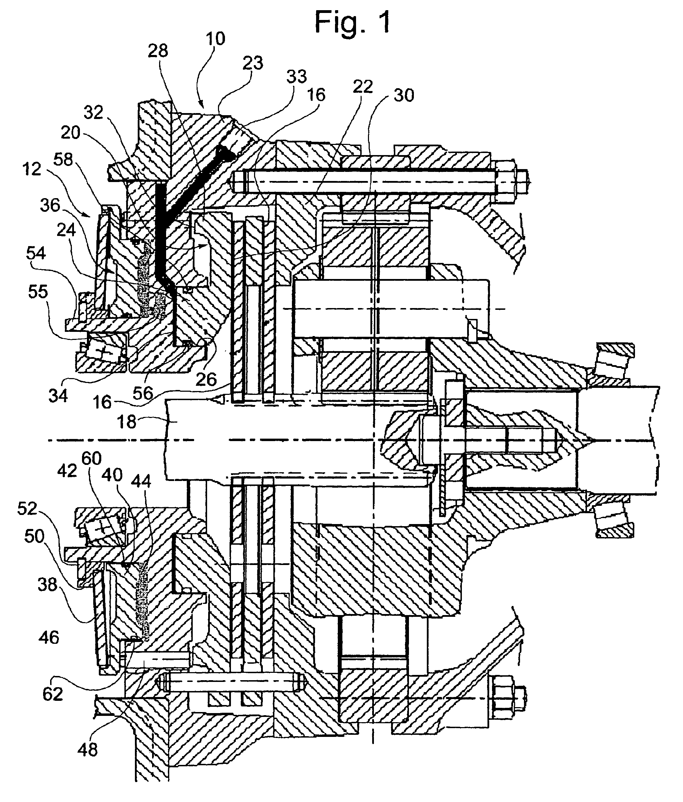

With reference to Figure 1, a braking unit for a motor-vehicle comprises a service brake 10 and an auxiliary braking device 12 not forming part of the invention. The service brake 10 includes in per-se-known manner a brake disc 16 mounted for rotation with an axle 18 of a vehicle wheel (not shown) and a main piston 20 for pressing the brake disc 16 against a surface of a reaction flange 22 fitted to a support structure 23 fast with the body of the vehicle.

The main piston 20 is an annular member having:
a tubular inner portion 24 extending axially inwards in a guide seat 26 which is provided in the support structure 23 and forms a main chamber 34; and
an flange-like outer portion 28 forming on its axially outer side a flat surface 30 for acting on the brake disc 16 and on its axially inner side a reaction surface 32 for the auxiliary braking device, as will be explained in greater detail later on.

The fore-and-aft movement of the main piston 20 for actuating and releasing the service brake is controlled in per-se-known manner by means of a hydraulic circuit of which a main supply line 33 is shown. The pressurised fluid supplied through the line 33 is fed into the main chamber 34 in the seat 26 and acts upon the tubular portion 24 of the main piston 20.

The auxiliary braking device 12 basically includes an auxiliary piston 36 and a spring 38, such as a Belleville spring, mounted coaxially with the main piston 20 and the brake disc 16. The auxiliary piston 36 has an inner tubular portion 40 extending axially outwards in a guide seat 42 which is provided in the support structure 23 and forms an auxiliary chamber 44. A flange-like portion 46 extending radially outwards from the periphery of the tubular portion 40 is arranged to act through actuating pins 48 upon the reaction surface 32 of the main piston 20.

The Belleville spring 38 abuts with its radially inner edge against a retaining washer 50 mounted by means of a snap ring 52 on a tubular portion 54 of the support structure 23 and with its radially outer edge against the axially outer side of the flange-like portion 46. Accordingly, due to the biasing force exerted by the spring 38 on the auxiliary piston 36, this latter urges the main piston 20 through the pins 48 against the brake disc 16. The auxiliary braking device 12 is thus normally activated, that is, it normally exerts a braking action on the respective wheel. In order to release the braking action of the auxiliary braking device 12, pressurised fluid is fed through an auxiliary supply line 55 into the auxiliary chamber 44 in the guide seat 42 so as to urge the auxiliary piston 36 against the biasing force of the spring 38.

A first pair of inner and outer seals 56 and 58, respectively, are provided between the tubular portion 24 of the main piston 20 and the guide seat 26 to ensure the tightness of the main chamber 34. In the same way, a second pair of inner and outer seals 60 and 62, respectively, are provided between the tubular portion 40 of the auxiliary piston 36 and the guide seat 42 to ensure the tightness of the auxiliary chamber 44.

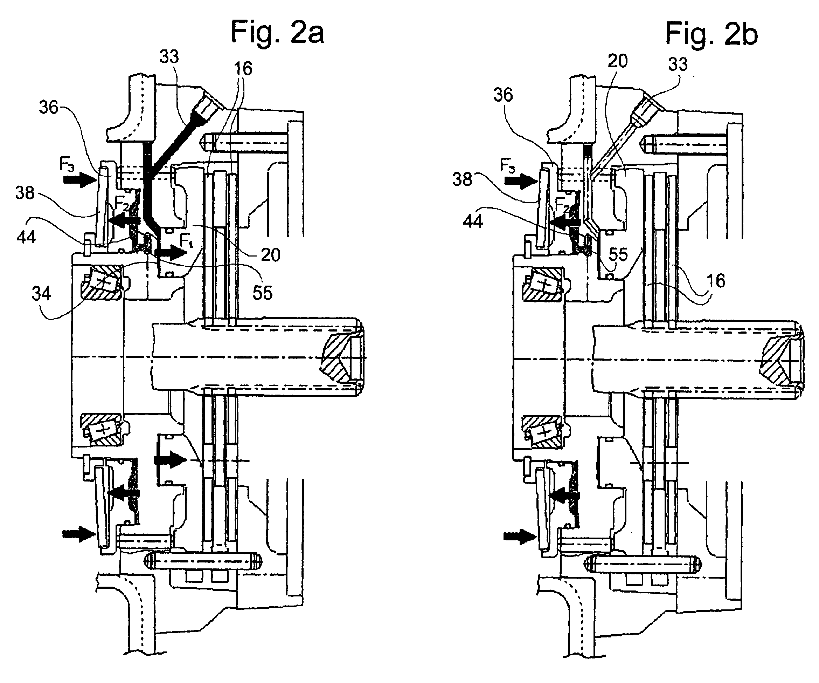

The operation of the braking unit will now be described with reference to Figures 2A to 3B, which show four different operating conditions of the unit.

Figures 2A and 2B show a first and a second operating condition of the braking unit in which the auxiliary braking device 12 is released, since the pressurised fluid fed into the auxiliary chamber 44 through the hydraulic supply 55 exerts a force F2 on the auxiliary piston 36 opposite to and greater than the biasing force (indicated F3) of the Belleville spring 38. Accordingly, no force generated by the auxiliary brake 12 acts upon the main piston 20. Of course, the greater is the difference between F2 and F3, the less is the braking unit affected by sudden pressure drops in the hydraulic circuit.

In the first operating condition, shown in Figure 2A, the service brake 10 is actuated by supplying the main chamber 34 with pressurised fluid through the main supply line 33, whereby a braking force F1 is applied on the main piston 20. The resulting braking force acting upon the brake disc 16 is thus F1.

In the second operating condition, shown in Figure 2B, the service brake 10 is not actuated (no pressurised fluid is supplied through the supply line 33) and the resulting braking force acting upon the brake disc 16 is zero.

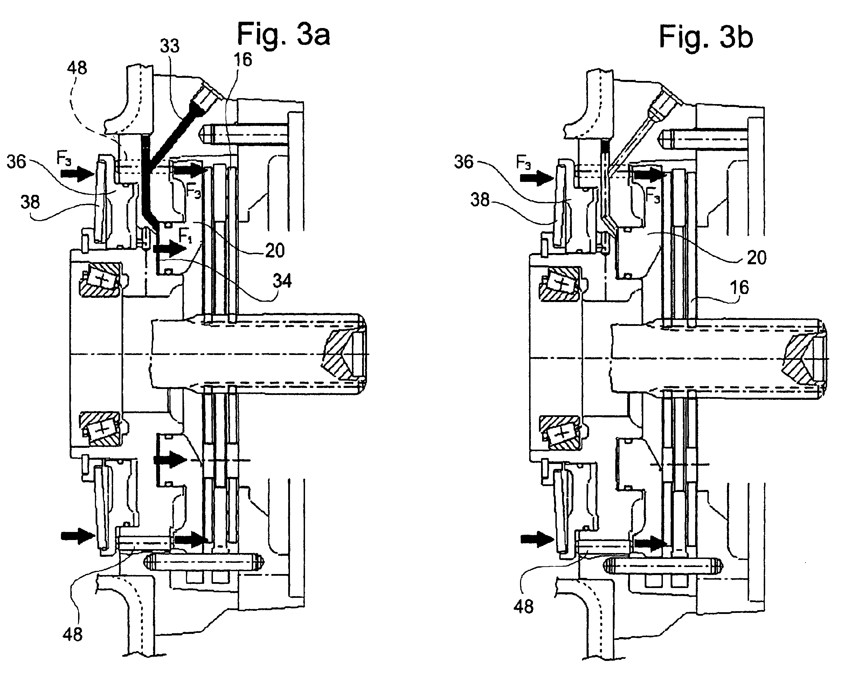

Figures 3A and 3B show a third and a fourth operating condition of the braking unit in which the auxiliary braking device 12 is activated, since either the vehicle's engine is not running or the auxiliary chamber 44 is not fed with pressurised fluid. Accordingly, the biasing force F3 generated by the Belleville spring 38 acts upon the main piston 20 through the actuating pins 48.

In the third operating condition, shown in Figure 3A, the service brake 10 is actuated and exerts a braking force F1 on the main piston 20. The resulting braking force acting upon the brake disc 16 is thus F1 + F3.

In the fourth operating condition, shown in Figure 3B, the service brake 10 is not actuated and the resulting braking force acting upon the brake disc 16 is thus F3 only.

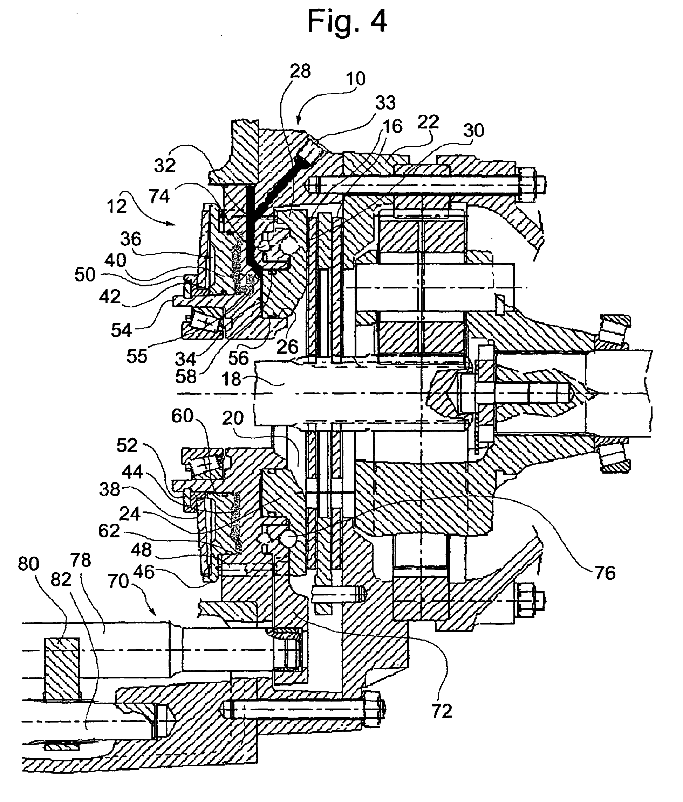

A preferred embodiment of a braking unit according to the invention is shown in Figure 4, where parts and elements identical to those of Figure 1 are indicated with the same reference numerals. This embodiment differs from the braking unit of figure 1 in that it further comprises a parking/emergency brake, or handbrake, generally indicated 70. The handbrake 70

comprises an actuating ring 72 mounted between the support structure 23 and the flange-like outer portion 28 of the main piston 20 through a first set of balls 74 and a second set of balls 76. The actuating ring 72 can be pressed against the main piston 20 so as to cause the latter to press the brake disc 16 against the reaction flange 22. The movement of the actuating ring 72 is driven by an actuating shaft 78, which is controlled in its turn by a control cam 80 mounted on a control shaft 82.

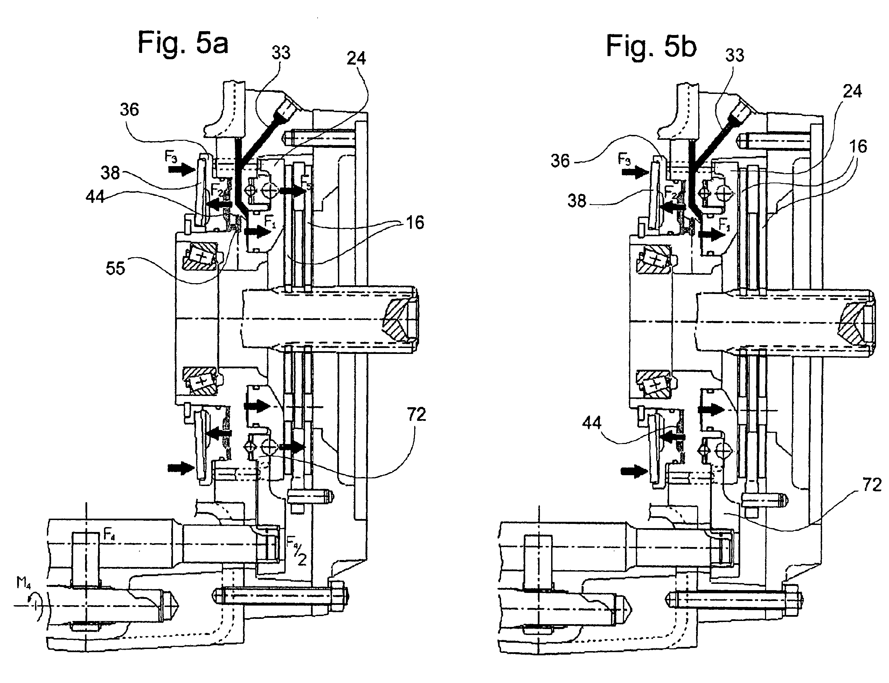

Figures 5A and 5B show a first and a second operating condition of the braking unit in both of which the auxiliary braking device 12 is released and the service brake 10 is actuated, so that only the braking force F1 generated by the service brake acts upon the brake disc 16. In the first operating condition (Figure 5A) the handbrake 70 is actuated and exerts a force F5 on the brake disc 16. The resulting braking force is thus F1 + F5. In the second operating condition (Figure 5B) the handbrake 70 is released and the resulting braking force is thus F1 only.

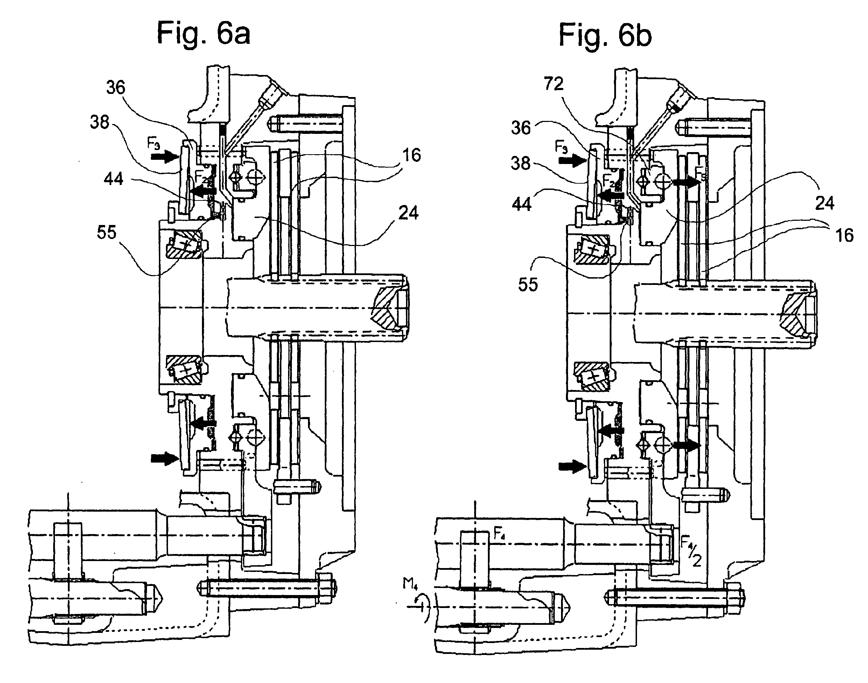

Figures 6A and 6B show a third and a fourth operating condition of the braking unit in which both the auxiliary braking device 12 and the service brake 10 are released, so that no braking force is applied on the brake disc 16 by these two braking devices. In the third operating condition (Figure 6A) the handbrake 70 is released and the resulting braking force is thus null. In the fourth operating condition (Figure 6B) the handbrake is actuated and the resulting braking force is thus F5.

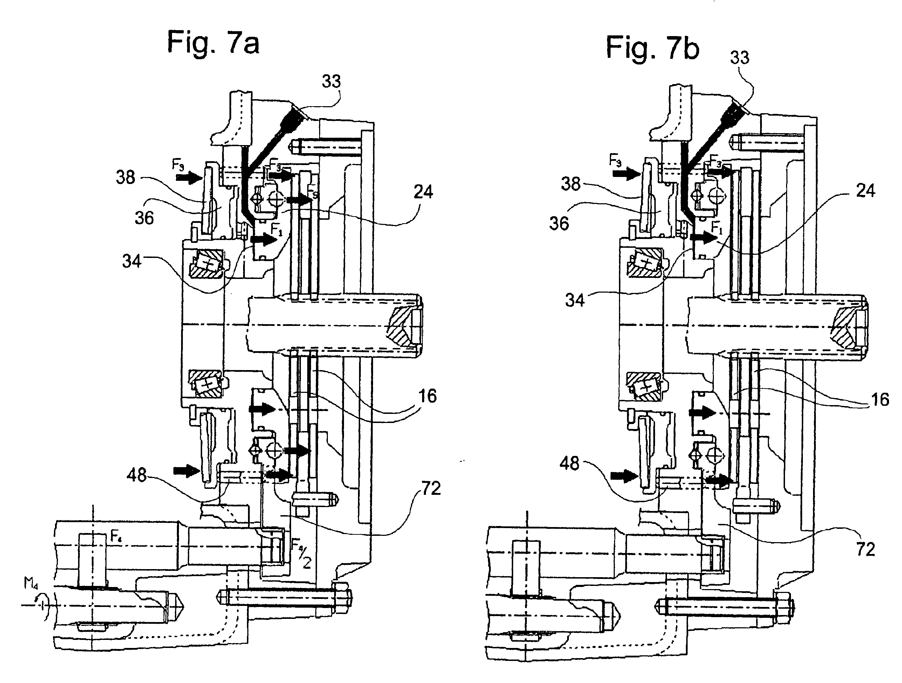

Figures 7A and 7B show a fifth and a sixth operating condition of the braking unit in which the auxiliary braking device 12 is activated and the service brake is actuated, so that a braking force F1 + F3 is applied on the brake disc 16. In the fifth operating condition (Figure 7A) the handbrake 70 is actuated and the resulting braking force is thus F1 + F3 + F5. In the sixth operating condition (Figure 7B) the hand brake is released and the resulting braking force is thus F1 + F3.

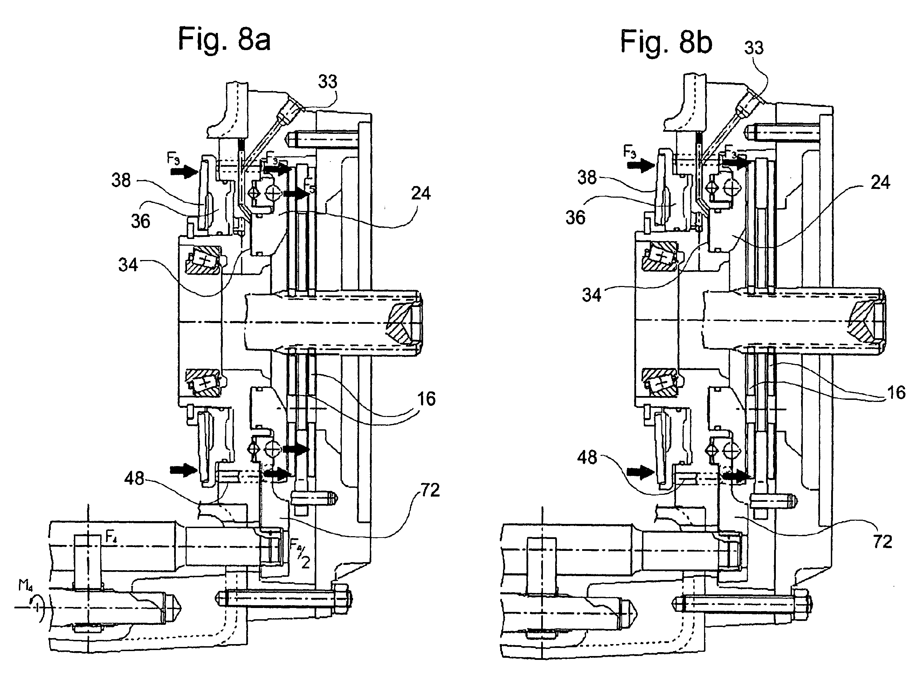

Figures 8A and 8B show a seventh and a eighth operating condition of the braking unit in which the auxiliary braking device 12 is activated and the service brake is released, so that a braking force F3 is applied on the brake disc 16. In the seventh operating condition (Figure 8A) the handbrake 70 is actuated and the resulting braking force is thus F3 + F5. In the eighth operating condition (Figure 8B) the handbrake 70 is released and the resulting braking force is thus F3 only.

It can be clearly understood from the above description that the auxiliary braking device of the invention offers the advantage of providing a further braking action which is added to and is independent of the braking action of the service brake and of the emergency/parking brake (handbrake). By virtue of the use of elastic control means, the auxiliary device offers the advantage of automatic activation in case of no hydraulic pressure (engine not running). However, if a breakdown in the hydraulic circuit occurs (resulting in a hydraulic pressure drop) when the vehicle is running, it is provided that the auxiliary braking device is not automatically activated, but its operation is controlled by a deceleration control system of the vehicle.

Another advantage of the auxiliary braking device is that it can be installed on all types of brakes, both simple and combined, both single-disc and multi-disc. Moreover, the device does not cause an increase in the power absorption since it makes use of the brake discs of the service brake.

Naturally, the principle of the invention remaining the same, embodiments and details of construction may be varied widely with respect to those described and illustrated purely by way of non-limiting example.

For instance, the releasing action on the Belleville spring 38 may be exerted mechanically or electrically, instead of hydraulically. Additionally, more than one spring 38 may be provided to generate the biasing force on the auxiliary piston 36. Furthermore, one or more brake discs may be provided.

## Claims

1. A braking unit for a motor-vehicle provided with a service brake (10) including:
- at least one brake disc (16),
- a reaction surface (22),
- first actuating means (20) for pressing the at least one brake disc (16) against the reaction surface (22) with a first braking force (F1), and the braking unit further comprising:
- a parking/emergency brake (70), comprising second actuating means (72) for pressing the at least one brake disc (16) against the reaction surface (22) with a second braking force (F5), and operable independently of the service brake (10) and of an auxiliary braking device,
wherein the auxiliary braking device (12) includes:
- elastic means (38) for pressing the at least one brake disc (16) against the reaction surface (22) with an auxiliary braking force (F3), and
- releasing means (55) for applying on the elastic means (38) a release force (F2) opposite to and greater than the auxiliary braking force (F3),
wherein the service brake (10), the parking/emergency brake (70) and the auxiliary braking device (12) are activable according to a plurality of operating conditions, so as to exert a resulting braking force on the brake disc (16) which is the combination of at least one among said first braking force (F1), said second braking force (F5) and said auxiliary braking force (F3).

2. A braking unit according to claim 1, wherein second actuating means (36, 48) are provided between the elastic means (38) and the at least one brake disc (16) for transmitting the auxiliary braking force (F3) from the elastic means (38) to the at least one brake disc (16).

3. A braking unit according to claim 2, wherein the second actuating means (36, 48) comprise an auxiliary piston (36) slideably mounted in a guide seat (42) defining an auxiliary chamber (44) and the releasing means (55) comprise an auxiliary supply line (55) for supplying the auxiliary chamber (44) with pressurised fluid.

4. A braking unit according to claim 3, wherein the first actuating means (20) comprise a main piston (20) slideably mounted in a guide seat (26) defining a main chamber (34), the movement of the piston (20) being controlled by the pressurised fluid supplied into the main chamber (34) through a main supply line (33) independent of the auxiliary supply line (55).

5. A braking unit according to claim 4, wherein the second actuating means (36, 48) further comprise actuating pins (48) interposed between the main piston (20) and the auxiliary piston (36).

6. A braking unit according to any of claims 3 to 5, wherein the auxiliary piston (36) is an annular member mounted coaxially with the at least one brake disc (16).

7. A braking unit according to any of the preceding claims, wherein the elastic means (38) comprise at least one Belleville spring (38) mounted coaxially with the at least one brake disc (16).

8. A braking unit according to claim 1, wherein the second actuating means comprises an actuating ring (72) arranged to act upon the at least one brake disc (16) and mechanical control means (78, 80, 82) for controlling the actuating ring (72).

## Patentansprüche

1. Bremseinheit für ein mit einer Betriebsbremse (10) versehenes Kraftfahrzeug, umfassend:
- mindestens eine Bremsscheibe (16),
- eine Gegenwirkungsfläche (22),
- erste Betätigungsmittel (20) zum Pressen der mindestens einen Bremsscheibe (16) gegen die Gegenwirkungsfläche (22) mit einer ersten Bremskraft (F1), und wobei die Bremseinheit ferner umfasst:
- eine Hand-/Feststellbremse (70), die zweite Betätigungsmittel (72) zum Pressen der mindestens einen Bremsscheibe (16) gegen die Gegenwirkungsfläche (22) mit einer zweiten Bremskraft (F5) umfasst und unabhängig von der Betriebsbremse (10) und von einer Zusatzbremseinrichtung betrieben werden kann, wobei die Zusatzbremseinrichtung (12) einschließt:
- elastische Mittel (38) zum Pressen der mindestens einen Bremsscheibe (16) gegen die Gegenwirkungsfläche (22) mit einer Zusatzbremskraft (F3), und
- Freigabemittel (55) zum Anwenden einer Freigabekraft (F2) auf die elastischen Mittel (38), die der Zusatzbremskraft (F3) entgegengesetzt und größer als diese ist,
wobei die Betriebsbremse (10), die Hand-/Feststellbremse (70) und die Zusatzbremseinrichtung (12) entsprechend einer Vielzahl von Betriebsbedingungen derart betätigt werden können, dass sie eine resultierende Bremskraft auf die Bremsscheibe (16) ausüben, welche die Kombination von mindestens einer unter der ersten Bremskraft (F1), der zweiten Bremskraft (F5) und der Zusatzbremskraft (F3) ist.

2. Bremseinheit nach Anspruch 1, bei der die zweiten Betätigungsmittel (36, 48) zwischen den elastischen Mitteln (38) und der mindestens einen Bremsscheibe (16) zum Übertragen der Zusatzbremskraft (F3) von den elastischen Mitteln (38) auf die mindestens eine Bremsscheibe (16) vorgesehen sind.

3. Bremseinheit nach Anspruch 2, bei der die zweiten Betätigungsmittel (36, 48) einen Zusatzkolben (36) umfassen, der verschiebbar in einen Führungssitz (42) montiert ist, der eine Zusatzkammer (44) festlegt, und bei der die Freigabemittel (55) eine Zusatzversorgungsleitung (55) zum Versorgen der Zusatzkammer (44) mit einem Druckfluid umfassen.

4. Bremseinheit nach Anspruch 3, bei der die ersten Betätigungsmittel (20) einen Hauptkolben (20) umfassen, der verschiebbar in einen Führungssitz (26) montiert ist, der eine Hauptkammer (34) festlegt, wobei die Bewegung des Kolbens (20) durch das in die Hauptkammer (34) durch eine von der Zusatzversorgungsleitung (55) unabhängige Hauptversorgungsleitung (33) eingespeiste Druckfluid gesteuert wird.

5. Bremseinheit nach Anspruch 4, bei der die zweiten Betätigungsmittel (36, 48) ferner Betätigungsbolzen (48) umfassen, die zwischen den Hauptkolben (20) und den Zusatzkolben (36) eingefügt sind.

6. Bremseinheit nach irgendeinem der Ansprüche 3 bis 5, bei welcher der Zusatzkolben (36) ein ringförmiges Element ist, das koaxial zur mindestens einen Bremsscheibe (16) montiert ist.

7. Bremseinheit nach irgendeinem der vorherigen Ansprüche, bei der die elastischen Mittel (38) mindestens eine Tellerfeder (38) umfassen, die koaxial zur mindestens einen Bremsscheibe (16) montiert ist.

8. Bremseinheit nach Anspruch 1, bei der die zweiten Betätigungsmittel einen Betätigungsring (72), der so angeordnet ist, dass er auf die mindestens eine Bremsscheibe (16) einwirkt, und mechanische Steuermittel (78, 80, 82) zum Steuern des Betätigungsrings (72) umfassen.

## Revendications

1. Unité de freinage pour un véhicule motorisé équipé d'un frein de service (10), comprenant :
- au moins un disque de frein (16),
- une surface de réaction (22),
- des premiers moyens d'actionnement (20) pour presser l'au moins un disque de frein (16) contre la surface de réaction (22) avec une première force de freinage (F1), et l'unité de freinage comprenant en outre :
- un frein de stationnement/secours (70), comprenant des deuxièmes moyens d'actionnement (72) pour presser l'au moins un disque de frein (16) contre la surface de réaction (22) avec une deuxième force de freinage (F5), et actionnables indépendamment du frein de service (10) et d'un dispositif de freinage auxiliaire,
dans laquelle le dispositif de freinage auxiliaire (12) comprend :
- des moyens élastiques (38) pour presser l'au moins un disque de frein (16) contre la surface de réaction (22) avec une force de freinage auxiliaire (F3), et
- des moyens de désengagement (55) pour appliquer sur les moyens élastiques (38) une force de désengagement (F2) opposée et supérieure à la force de freinage auxiliaire (F3), dans laquelle le frein de service (10), le frein de stationnement/secours (70) et le dispositif de freinage auxiliaire (12) sont actionnables en fonction d'une pluralité de conditions de fonctionnement, de manière à exercer une force de freinage résultante sur le disque de frein (16) laquelle représente la combinaison d'au moins une force parmi ladite première force de freinage (F1), ladite deuxième force de freinage (F5) et ladite force de freinage auxiliaire (F3).

2. Unité de freinage selon la revendication 1, dans laquelle des deuxièmes moyens d'actionnement (36, 48) sont prédisposés entre les moyens élastiques (38) et l'au moins un disque de frein (16) pour transmettre la force de freinage auxiliaire (F3) des moyens élastiques (38) à l'au moins un disque de frein (16).

3. Unité de freinage selon la revendication 2, dans laquelle les deuxièmes moyens d'actionnement (36, 48) comprennent un piston auxiliaire (36) monté coulissant dans un siège de guidage (42) définissant une chambre auxiliaire (44) et les moyens de désengagement (55) comprennent une ligne d'alimentation auxiliaire (55) pour alimenter la chambre auxiliaire (44) avec un fluide sous pression.

4. Unité de freinage selon la revendication 3, dans laquelle les premiers moyens d'actionnement (20) comprennent un piston principal (20) monté coulissant dans un siège de guidage (26) définissant une chambre principale (34), le mouvement du piston (20) étant commandé par le fluide sous pression alimenté dans la chambre principale (34) à travers une ligne d'alimentation principale (33) indépendante de la ligne d'alimentation auxiliaire (55).

5. Unité de freinage selon la revendication 4, dans laquelle les deuxièmes moyens d'actionnement (36, 48) comprennent en outre des goupilles d'actionnement (48) interposées entre le piston principal (20) et le piston auxiliaire (36).

6. Unité de freinage selon l'une quelconque des revendications 3 à 5, dans laquelle le piston auxiliaire (36) est un élément annulaire monté de manière coaxiale avec l'au moins un disque de frein (16).

7. Unité de freinage selon l'une quelconque des revendications précédentes, dans laquelle les moyens élastiques (38) comprennent au moins une rondelle Belleville (38) monté de manière coaxiale avec l'au moins un disque de frein (16).

8. Unité de freinage selon la revendication 1, dans laquelle les deuxièmes moyens d'actionnement comprennent un anneau d'actionnement (72) agencée pour agir sur l'au moins un disque de frein (16), et des moyens de commande mécaniques (78, 80, 82) pour commander l'anneau d'actionnement (72).
